# NEUE EUROPÄISCHE PATENTSCHRIFT

(11) **EP 1 527 713 B2**
(45) Veröffentlichungstag und Bekanntmachung des Hinweises auf die Entscheidung über den Einspruch: **31.07.2013**
(45) Hinweis auf die Patenterteilung: 22.09.2010
(21) Anmeldenummer: 05002497.5
(22) Anmeldetag: 30.08.2002
(51) Int. Cl.: A45D 44/00

(54) **Haarfarbberatung**
Hair colour consultation
Conseil en couleur de cheveux

(30) Priorität: 30.08.2001 DE 10142526
(43) Veröffentlichungstag der Anmeldung: 04.05.2005
(62) Teilanmeldung aus: 02797653.9
(73) Patentinhaber: The Procter & Gamble Company, Cincinnati, OH 45202 (US)
(72) Erfinder: Fertig, Werner, 64625 Bensheim (DE); Mattinger, Detlef, 64404 Bickenbach (DE); Uhl, Stefan, 64319 Pfungstadt (DE)
(74) Vertreter: Töpert, Verena Clarita

(56) Entgegenhaltungen:
- EP-A- 1 147 722
- EP-A1- 1 147 722
- WO-A1-01/32051
- WO-A1-97/03517
- WO-A1-99/23609
- US-A- 4 297 724
- US-A- 4 731 743

## Beschreibung

Die Erfindung betrifft ein Verfahren für eine Haarfarbberatung nach der Gattung des Oberbegriffs des Anspruchs 1.

Ein derartiges Verfahren für eine Haarfarbberatung ist beispielsweise aus der EP1147722A1 bekannt, das mit einer statischen, digitalen Portraitaufnahme arbeitet und bei dem wahlweise eine gewünschte Frisurfarbe eingegeben und auf einem Bildschirm (Display) dargestellt wird.

Vor einer Entscheidung zu einer neuen Haarfarbe hat eine Person, beispielsweise eine Friseurkundin, eine Hemmschwelle zu überwinden, weil sie vorher nicht weiß, wie sie nachher aussehen wird. Um hier auch den Friseur bei seiner Beratungstätigkeit zu unterstützen, wird mit dem Haarfarbberatungs-Computersystem nach der EP1147722A1 ein zweidimensionales Bild (Digitalfoto) einer Person mit einer neuen simulierten Haarfarbe versehen und auf einem Bildschirm dargestellt, wobei das Ergebnis statisch und unnatürlich aussieht. Ein Grund, warum die Ergebnisse herkömmlicher Haarfarbberatungs-Computersysteme statisch wirken, ist, dass sie durch ein Stehbild statisch sind. Ein Foto kann kein bewegtes, lebendiges Bild ersetzen, wie es die Person beispielsweise erfährt, wenn sie sich nach der Behandlung im Spiegel betrachtet.

WO 99/23609 betrifft ein Verfahren und eine Vorrichtung zum Zeigen mindestens eines Teils eines menschlichen Körpers mit einem veränderten Erscheinungsbild. Hierbei wird beispielsweise eine statische Computerperücke eingesetzt, die über ein "Trackingmeans" mittels einer sehr komplexen Software dynamisiert wird.

Auch US 4,297,724 betrifft ein Verfahren und eine Vorrichtung zum Probieren einer Frisur im Bild, bei der ebenfalls eine statische Computerperücke eingesetzt wird.

EP 1 147 722 A1 offenbart ein statisches Verfahren zur Frisurberatung. Bei dem in diesem Dokument offenbarten Verfahren ist ein aufwändiger Masking- bzw. Antimaskingschritt notwendig.

Der Erfindung liegt die Aufgabe zu Grunde, ein gattungsgleiches Verfahren für eine Haarfarbberatung zu schaffen, das die genannten Nachteile nicht aufweist.

Gelöst wird diese Aufgabe nach den Merkmalen des kennzeichnenden Teils des Anspruchs 1. Durch dieses Verfahren für eine Haarfarbberatung ist es möglich, das Ergebnis einer Haarfärbung vor der eigentlichen Farbveränderung zu visualisieren. Im Gegensatz zu bestehenden Haarfarbberatungssystemen basiert es einerseits auf einem dynamischen Videobild und andererseits auf einer Farbveränderung der natürlichen Haare der Person. Das Videobild wird durch das Verfahren in Echtzeit bearbeitet und auf einem Bildschirm wiedergegeben, so dass der Eindruck einer Spiegelbenutzung entsteht. Erfindungsgemäß ist vorgesehen, die Haarfarbe kontinuierlich und in einem Zyklus nach einem Farbkreisflächenspektrum zu verändern, wobei ein Start oder Stopp dieser laufenden Farbveränderung vorgesehen ist. Dadurch entfällt eine gezielte Eingabe einer Wunschhaarfarbe aus einer Farbpalette, da in dem Moment, wo eine Person glaubt, einen zu ihr passenden Farbton gefunden zu haben, die laufende Farbveränderung einfach stoppt und auch noch in diesem Bereich den gestoppten Farbton manuell verschieben kann, bis die eigentliche Wunschhaarfarbe getroffen ist. Der Zyklus der laufenden Farbveränderung ist in seiner Wiederholfrequenz frei wählbar, wodurch dieser individuell an eine Person angepasst werden kann. Diese laufende Farbveränderung eignet sich auch besonders gut für eine werbewirksame Demonstration für eine Haarfarbveränderung einer Kundin in beispielsweise einem Drogeriemarkt, wobei wahlweise zur Werbung ein entsprechender Videofilm auf dem Bildschirm gezeigt werden kann. Weitere vorteilhafte Weiterbildungen der Erfindung gehen aus den Unteransprüchen hervor.

Die Erfindung bildet wahlweise ein Betrachten eines seitenrichtigen Bildes oder eines eigenen Spiegelbildes nach. Dazu wird mit einer Videokamera das aktuelle Bild der Person aufgenommen, von einem Computer automatisch bearbeitet und auf einem Bildschirm dargestellt. Durch diese dynamische Darstellung in Echtzeit wird der Bildschirm zum Spiegel. Die Aufgabe des Computers ist, das Ausgangsbild so zu modifizieren, dass das Ergebnis einer Haarfärbung simuliert wird. Zu diesem Zweck muss das Computersystem die Haare der Person selbstständig erkennen und daraufhin deren Farbe nach dessen Vorgaben, bzw. nach den Vorgaben des Friseurs, verändern. Auf diese Weise entsteht ein dynamisches, natürlich wirkendes Simulationsergebnis. Da lediglich das sich bewegendes Eigenhaar umgefärbt wird, entfällt der Effekt von aufgesetzt wirkenden "Computerperücken" mit einer entsprechenden Farbgebung. Die Haare fallen natürlich, sind nicht starr, und die Person kann sich vor dem virtuellen Spiegel bewegen, den Kopf drehen, sich von der Seite betrachten, den Gesichtsausdruck ändern und sich mit der neuen Haarfarbe selbst beurteilen, ob die ausgewählte Wunschhaarfarbe 32 der Erwartung entspricht. Wenn nicht, können sofort andere Wunschhaarfarben 32 simuliert werden.

Die Erfindung wird an Hand eines Ausführungsbeispiels näher beschrieben.

Es zeigt:
- Fig. 1: einen schematischen Ablauf eines Verfahrens für eine Haarfarbberatung als ein Haarfarbberatungssystem;
- Fig. 2: einen schematischen Ablauf eines Verfahrens für eine Haarfarbberatung mit einem Bildschirm in einer Spiegelbilddarstellung einer Person;
- Fig. 3: einen Bildschirm bzw. Touchscreen mit einer Farbpalette bzw. Farbkreisflächenspektrum, und
- Fig. 4: ein Flussdiagramm des Verfahrens.

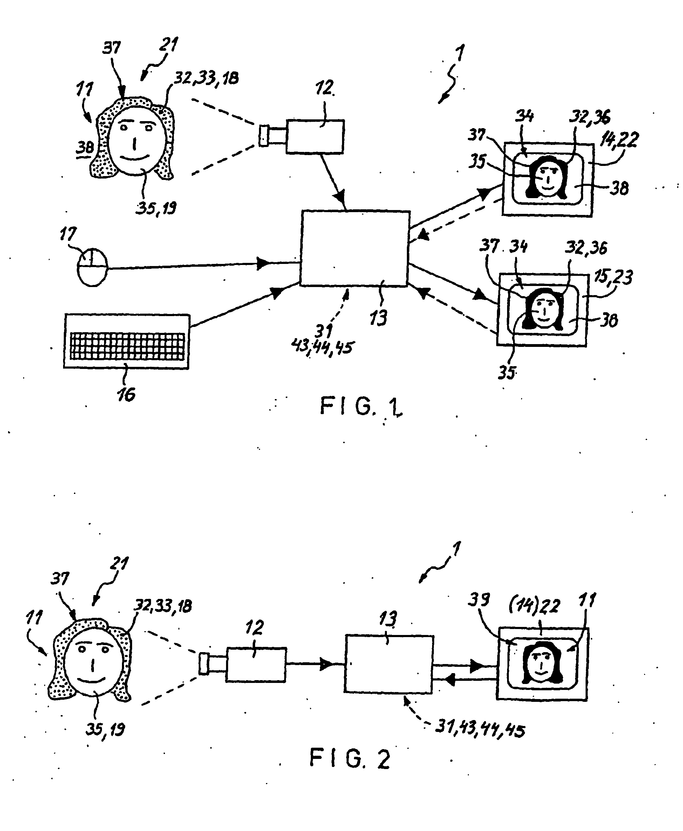

Die Fig. 1 zeigt einen schematischen Ablauf eines Verfahrens für eine Haarfarbberatung als ein Haarfarbberatungssystem 1, bei dem mittels einer Videokamera 12, eines Computers 13 und mindestens eines Bildschirms 14 bzw. Touchscreen 22 eine Auswahl und Darstellung einer gewünschten Haarfarbe 36 einer Person 11 auf dem Bildschirm/ Touchscreen 14,22 dargestellt wird, wobei aktuelle Einzelbilder 21 der Person 11 von der Videokamera 12 kontinuierlich aufgenommen werden. Diese kontinuierliche Bildfolge von Einzelbildern 21 der Videokamera 12 wird in Echtzeit an den Computer 13 übertragen. Dort wird für jedes Einzelbild 21 mittels einer Einrichtung 31 eine automatische Bildbearbeitung und Bildverarbeitung durchgeführt, bei der der Computer 13 einen Haarbereich 32 der Person 11 durch Segmentierung identifiziert, was eine Erkennung und Trennung von relevanten Bildbereichen bedeutet sowie auch deren natürliche Haarfarbe 33, die Haarfarbe 33 dieses Haarbereiches 32 nach vorgegebenen Spezifikationen ändert und die veränderten Einzelbilder 21 wiederum in Echtzeit auf mindestens einem Bildschirm 14, 15 bzw. Touchscreen 22,23 darstellt. Echtzeit bedeutet in diesem Kontext: mit einer von der Person 11 nicht oder kaum wahrnehmbaren Zeitverzögerung zwischen den einzelnen Bildaufnahmen 21 und der Darstellung am Bildschirm 14, 15 bzw. Touchscreen 22,23 mit einer flüssigen Darstellung der Bewegungen. Daraus folgt unter anderem auch eine minimale Bildrate von ungefähr zehn Einzelbildern 21 pro Sekunde.

Vor einer eigentlichen Simulation mit einer neuen Wunschhaarfarbe 36 werden dem Computer 13 gewisse Anfangsparameter mitgeteilt (Initialisierung). Hierzu verarbeitet die Einrichtung 31 kontinuierlich und automatisch manuell eingegebene Anfangsparameter eines Bildbereichs 34, wobei als mindestens ein Anfangsparameter ein Haarbereich 32 markiert und von einer wahlweisen Wunschhaarfarbe 36 besetzt wird. Als weitere Kombinationen von Anfangsparametern können vorgesehen werden, bei welchen Bildbereichen 34 es sich um einen Haarbereich 32 und um einen Hautgrund 35 handelt, und wodurch diese charakterisiert werden (Farbtöne, Textur, Morphologie usw.), welche (natürliche) Ausgangshaarfarbe 33 vorherrscht und welche Farbe (Wunschhaarfarbe 36) gewünscht wird. Das kann über Anwählen oder Maskieren von Bildbereichen 34 oder Schaltflächen eines oder mehrerer Bedienmenüs auf dem Bildschirm 14, 15 bzw. Touchscreen 22,23 geschehen. Die zu diesem Zweck erforderlichen Eingabegeräte können beispielsweise als Maus 17 oder ähnliches (Trackball, Touchpad usw.), als Tastatur 16 oder/und als mindestens ein Touchscreen 22,23 vorgesehen werden. Die Initialisierungsphase kann unter anderem nötig sein, um dem Computer 13 mitzuteilen, welche Bildbereiche 34 des Haarbereichs 32 die Frisur 37 darstellen, die vom restlichen Bild separiert und umgefärbt werden soll. Dies kann beispielsweise dadurch geschehen, dass der Benutzer mindestens in einem der Bildbereiche 34 das Haar 18, die Haut 19 und einen Hintergrund 38 einen oder mehrere Punkte oder einen oder mehrere Bereiche markiert. Es ist außerdem möglich, dass Bereiche markiert werden, die explizit nicht umgefärbt werden sollen, wie z. B. Augenbrauen, Koteletten oder Bart. Um dem Computer 13 die Erkennung der Haarbereiche 32 zu erleichtern und die Fehleranfälligkeit des Haarfarbberatungssystems 1 gering zu halten, ist es verteilhaft, ein Bild von einer Person 11 vor einem homogenen, einfarbigen Hintergrund 38 mit möglichst einer definierten Beleuchtung aufzunehmen.

Der Haarbereich 32 wird durch eine automatische Analyse naheliegender und ähnlicher Pixelfarbwerte kontinuierlich markiert und von der Wunschhaarfarbe 36 entsprechend besetzt, woraus sich ein einfaches Nachführverfahren des durch Bewegung der Person 11 sich laufend ändernden Haarbereichs 32 ergibt. Hierzu wird zur Analyse naheliegender und ähnlicher Pixelfarbwerte ein repräsentativer Teilbereich des Haarbereichs 32 manuell ausgewählt und dann die automatische Analyse gestartet, wodurch die Einrichtung 31 zur kontinuierlichen Bildbearbeitung lediglich den Haarbereich 32 mit der Wunschhaarfarbe 36 zu bearbeiten hat. Dieser automatischen Markierung liegt die Überlegung zu Grunde, dass die Ausgangshaarfarbe 33 im Haarbereich 32 eine zusammenhängende Fläche naheliegender und ähnlicher Pixelfarbwerte aufweist, die sich vom übrigen Bildbereich 34 deutlich differenzieren lassen.

Der Haarbereich 32 kann aber wahlweise durch eine automatische Analyse einer zusammenhängender Textur oder/und zusammenhängender geomorphologischer Eigenschaften kontinuierlich markiert werden, um den übrigen Bildbereich 34 deutlich zu differenzieren.

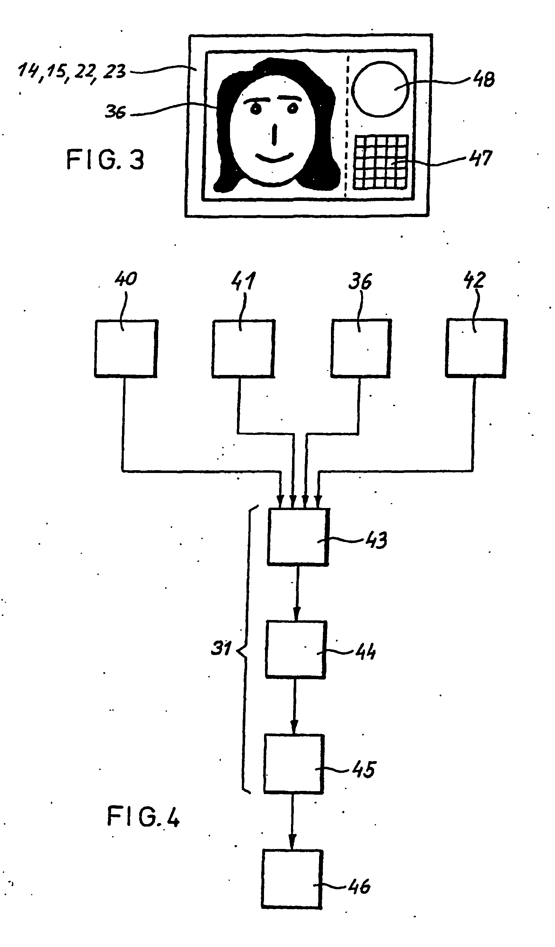

Je nach Anwendungsbereich (Friseur/Retail) kann außer der Person 11 auch ein Berater, zum Beispiel ein Friseur, anwesend sein. In diesem Fall ist es sinnvoll, wenn der Friseur für die Programmbedienung und Initialisierung einen eigenen, zweiten Bildschirm 15 bzw. Touchscreen 23 zur Verfügung hat. Auf diesem zweiten Bildschirm 15 bzw. Touchscreen 23 können zusätzlich zu dem Kamerabild für die Bedienung wichtige Informationen dargestellt werden, zum Beispiel die Farbpalette 47 (Fig. 3) der Zielhaarfarben (Wunschfarbe 36), so dass auf dem ersten Bildschirm 14 bzw. Touchscreen 22 für die Person 11 nur das Simulationsergebnis sichtbar zu sein braucht. Der Touchscreen 22,23 hat den Vorteil, dass weitere Eingabegeräte überflüssig sind, da entsprechende Bedienmenüs oder Schaltflächen direkt durch Antippen mit einem Finger oder Stift auf der Touchscreen-Oberfläche aktiviert werden.

In einer bevorzugten Ausführung werden die kontinuierlichen Videobilder der Person 11 vom Computer 13 stetig um eine vertikale Achse gespiegelt auf dem Bildschirm 14 als ein Spiegelbild 39 dargestellt (Fig. 2). Dadurch wird der Eindruck erzeugt, als betrachte man sich in einem Spiegel, was den alltäglichen Gewohnheiten entgegen kommt und den ungezwungenen Umgang mit dem Haarfarbberatungssystem 1 fördert. Um eine Parallaxe zwischen der Videokamera 12 und dem Bildschirm 14, 15 bzw. Touchscreen 22,23 zu minimieren, sollte die Videokamera 12 dicht am oberen Rand des Bildschirms 14,15,22,23 positioniert sein, wie beispielsweise nach der DE19635753A1, Fig. 4. Im Idealfall fällt die optische Achse des Videobildes 34 mit der optischen Achse des Bildschirms 14,15 bzw. Touchscreen 22,23 zusammen, um die Parallaxe vollständig zu vermeiden. Eine entsprechende Lösung ist beispielsweise auch in der DE19635753A1 zu Fig. 5 beschrieben. Um den Effekt eines Spiegels zu perfektionieren, sollte der Abbildungsmaßstab von der Person 11 und des Bildschirms 14,15 bzw. Touchscreen 22,23 ungefähr 1:1 sein.

Erfindungsgemäß ist vorgesehen, die Haarfarbe 33 kontinuierlich und in einem Zyklus nach einem Farbkreisflächenspektrum 48 (Fig. 3) zu verändern, wobei ein Start oder Stopp dieser laufenden Farbveränderung vorgesehen ist. Dadurch entfällt eine gezielte Eingabe einer Wunschhaarfarbe 36 aus einer Farbpalette 47, da in dem Moment, wo eine Person 11 glaubt, einen zu ihr passenden Farbton gefunden zu haben, die laufende Farbveränderung einfach stoppt und auch noch in diesem Bereich den gestoppten Farbton manuell verschieben kann, bis die eigentliche Wunschhaarfarbe 36 getroffen ist. Der Zyklus der laufenden Farbveränderung ist in seiner Wiederholfrequenz frei wählbar, wodurch dieser individuell an eine Person 11 angepasst werden kann. Diese laufende Farbveränderung eignet sich auch besonders gut für eine werbewirksame Demonstration für eine Haarfarbveränderung einer Kundin 11 in beispielsweise einem Drogeriemarkt, wobei wahlweise zur Werbung ein entsprechender Videofilm auf dem Bildschirm 14,15 gezeigt werden kann.

In der Fig. 4 ist ein schematisches Flussdiagramm des Verfahrens dargestellt. Neben einer Eingabe einer Bildaufnahme 40, wobei es ein bewegtes Videobild oder zunächst nur ein Einzelbild 21 sein kann, ist gegebenenfalls eine Eingabe von Zusatzinformationen 41 (beispielsweise vom Friseur bestimmte Ausgangshaarfarbe der Kundin und/oder der Grauanteil, aber auch allgemeine Kundendaten) vorgesehen sowie eine Eingabe einer Auswahl einer Wunschhaarfarbe 36 und eine Eingabe einer Markierung 42 mindestens eines Bildbereichs 34, wobei die Reihenfolge beliebig ist. Diese Daten fließen in eine Initialisierungseinrichtung 43 ein, in der das Verfahren gestartet wird und in eine Segmentierungseinrichtung 44 einfließen, in der eine Erkennung und Trennung von relevanten Bildbereichen 34 erfolgt. Nach einer Transformation der Ausgangshaarfarbe 33 in die vorgegebene Wunschhaarfarbe 36 in einer Farbtransformationseinrichtung 45 erfolgt eine entsprechende Bilddarstellung 46 eines Einzelbildes 21 einer Person 11 mit der Wunschhaarfarbe 36 auf einem Bildschirm 14,15 bzw. Touchscreen 22,23. Die nächstfolgenden Einzelbilder 21 der Videoaufnahme werden entsprechendend verarbeitet und fortlaufend dargestellt, wobei eine Bildwiedergabefrequenz von ungefähr 10 bis 30 Bilder pro Sekunde vorgesehen ist, wodurch ein fließendes, bewegtes Bild entsteht. Es kann aber auch vorgesehen werden, dass lediglich eine Wunschhaarfarbe 36 zur Initialisierung ausreicht, wenn die übrigen Parameter bzw. Spezifikationen automatisch erfasst und verarbeitet werden.

Da nur ein Teilaspekt des realen Bildes modifiziert wird, gibt es keine Diskrepanzen zwischen realen und virtuellen Bildelementen, wie beispielsweise Winkel- und Positionsungenauigkeiten, unterschiedlicher Beleuchtung der verschiedenen Bildelemente, Skalierungsfehler usw. Auch gibt es keine Verdeckungsproblematik, da nicht berechnet werden muss, welche Teile des virtuellen Bildelements vom realen Bild verdeckt werden. Da das reale Bild nur in der Farbe verändert wird, verhält sich das Haar einer Person automatisch physikalisch korrekt, was eine natürliche Wirkung auch einer Bewegung der Person bei der Wiedergabe auf dem Bildschirm bzw. Touchscreen bewirkt.

### Bezugszeichenliste:

- 1: Haarfarbberatungssystem
- 11: Person
- 12: Videokamera
- 13: Computer
- 14: Erster Bildschirm
- 15: Zweiter Bildschirm
- 16: Eingabetastatur
- 17: Maus
- 18: Haar
- 19: Haut
- 21: Einzelbild
- 22: Erster Touchscreen
- 23: Zweiter Touchscreen
- 31: Einrichtung
- 32: Haarbereich
- 33: Ausgangshaarfarbe
- 34: Bildbereich
- 35: Hautgrund
- 36: Wunschhaarfarbe
- 37: Frisur
- 38: Hintergrund
- 39: Spiegelbild
- 40: Bildaufnahme
- 41: Zusatzinformationen
- 42: Markierung
- 43: Initialisierungseinrichtung
- 44: Segmentierungseinrichtung
- 45: Farbtransformationseinrichtung
- 46: Bilddarstellung
- 47: Farbpalette
- 48: Farbkreisflächenspektrum

## Patentansprüche

1. Verfahren für eine Haarfarbberatung beziehungsweise Haarfarbvisualisierung, bei dem mittels einer Videokamera, eines Computers und mindestens eines Bildschirms eine Auswahl einer gewünschten Haarfarbe einer Person auf dem Bildschirm dargestellt wird, **dadurch gekennzeichnet, dass** aktuelle Einzelbilder (21) von der Person (11) mittels der Videokamera (12) kontinuierlich aufgenommen werden und in einer kontinuierlichen Bildfolge in den Computer (13) in Echtzeit übertragen werden, wobei für jedes Einzelbild (21) mittels einer Einrichtung (31) eine automatische Bildbe- und Bildverarbeitung durchgeführt wird, bei der der Computer (13) einen Haarbereich (32) der Person (11) durch eine automatische Analyse nahe liegender und ähnlicher Pixelfarbwerte und/oder eine automatische Analyse einer zusammenhängenden Textur oder/und zusammenhängender geomorphologischer Eigenschaften kontinuierlich markiert und die Haarfarbe (33) dieses Haarbereichs (32) nach vorgegebenen Spezifikationen ändert, und wobei die veränderten Einzelbilder (21) wiederum in Echtzeit auf mindestens einem Bildschirm (14, 15) oder/und Touchscreen (22, 23) dargestellt werden, wobei
die Haarfarbe (33) kontinuierlich und in einem Zyklus nach einem Farbkreisflächenspektrum (48) verändert wird, wobei ein Start oder Stopp dieser laufenden Farbveränderung vorgesehen ist, und
der Zyklus in seiner Wiederholfrequenz frei wählbar ist.

2. Verfahren nach einem der vorherigen Ansprüche, **dadurch gekennzeichnet, dass** dem Computer (13) gewisse Anfangsparameter, insbesondere Farbtöne, Textur und/oder Morphologie, zur Charakterisierung eines Bildbereichs, vorzugsweise zur Charakterisierung eines Haarbereichs (32), mitgeteilt werden.

3. Verfahren nach Anspruch 1 oder 2, **dadurch gekennzeichnet, dass** die Einrichtung (31) manuell eingegebene Anfangsparameter eines Bildbereiches (34) zur Initialisierung kontinuierlich automatisch verarbeitet, wobei als mindestens ein Anfangsparameter der Haarbereich (32) markiert und von einer wahlweisen Wunschhaarfarbe (36) besetzt wird.

4. Verfahren nach einem der vorherigen Ansprüche, **dadurch gekennzeichnet, dass** die Bildfolge von mehreren Einzelbildern (21) mindestens vom Bildschirm (14) für die Kundin (11) als ein Spiegelbild (39) dargestellt wird.

5. Vorrichtung für eine Haarfarbberatung beziehungsweise Haarfarbvisualisierung umfassend eine Videokamera zur kontinuierlichen Aufnahme aktueller Einzelbilder (21) von einer Person (11), einen Computer (13), an den die Einzelbilder in einer kontinuierlichen Bildfolge in Echtzeit übertragbar sind, eine Einrichtung (31) zur Durchführung einer automatischen Bildbe- und Bildverarbeitung für jedes Einzelbild (21), **dadurch gekennzeichnet, dass** mit dem Computer (13) ein Haarbereich (32) der Person (11) durch eine automatische Analyse nahe liegender und ähnlicher Pixelfarbwerte und/oder eine automatische Analyse einer zusammenhängenden Textur oder/und zusammenhängender geomorphologischer Eigenschaften kontinuierlich markiert und die Haarfarbe (33) dieses Haarbereichs (32) nach vorgegebenen Spezifikationen geändert werden kann, und mindestens einen Bildschirm (14, 15) zur Darstellung einer Auswahl einer gewünschten Haarfarbe der Person und zur Darstellung der veränderten Einzelbilder (21) in Echtzeit, wobei
die Haarfarbe (33) kontinuierlich und in einem Zyklus nach einem Farbkreisflächenspektrum (48) veränderbar ist, wobei ein Start oder Stopp dieser laufenden Farbveränderung vorgesehen ist, und
der Zyklus in seiner Wiederholfrequenz frei wählbar ist.

6. Vorrichtung nach Anspruch 5 weiterhin umfassend einen Touchscreen, insbesondere einen Touchscreen zur Mitteilung von Anfangsparametern an den Computer (13) zur Charakterisierung eines Bildbereiches, der insbesondere ein Haarbereichs ist.

7. Drogeriemarkt, aufweisend eine Vorrichtung nach einem der Ansprüche 5 bis 6.

## Claims

1. A method for a hair color consultation or, respectively, hair color visualization in which a selection of a desired hair color of a person is presented at a display by means of a video camera, a computer and at least one display, **characterized in that** current individual images (21) of the person (11) are acquired continuously by means of the video camera (12) and are transferred in real time in a continuous image series into the computer (13), wherein for each individual image (21) an automatic image handling and processing is implemented by means of a device (31), in which the computer (13) continuously marks a hair region (32) of the person (11) via an automatic analysis of nearby and similar pixel color values and/or an automatic analysis of a contiguous texture and/or contiguous geomorphological properties and changes the hair color (33) of this hair region (32) according to predetermined specifications, and wherein the modified individual images (21) are in turn presented in real time on at least one display (14,15) and/or touch screen (22, 23), wherein
the hair color (33) is varied continuously and in a cycle according to a color wheel area spectrum (48), wherein a start or stop of this running color change is provided, and
the repetition frequency of the cycle is freely selectable.

2. The method according to any of the previous claims, **characterized in that** certain initial parameters -- in particular color tones, texture and/or morphology -- are communicated to the computer to characterize an image region, preferably to characterize a hair region (32).

3. The method according to claim 1 or 2, **characterized in that** the device (31) continuously, automatically processes manually input initial parameters of an image region (34) for initialization, wherein the hair region (32) is marked and filled with an optional desired hair color (36) as at least one initial parameter.

4. The method according to any of the previous claims, **characterized in that** the image series of multiple individual images (21) is presented to the customer (11) as a mirror image (39) by at least the display (14).

5. A device for a hair color consultation or, respectively, hair color visualization, comprising a video camera for continuous acquisition of current individual images (21) of a person (11); a computer (13) to which the individual images may be transferred in real time in a continuous image series; a device (31) to implement an automatic image handling and processing for each individual image (21), **characterized in that** a hair region (32) of the person (11) may be continuously marked by the computer via an automatic analysis of nearby and similar pixel color values and/or an automatic analysis of a contiguous texture and/or contiguous geomorphological properties, and the hair color (33) of this hair region (32) may be changed according to predetermined specifications; and at least one display (14,15) to present a selection of a desired hair color of the person and to present the modified individual images (21) in real time, wherein
the hair color (33) is variable continuously and in a cycle according to a color wheel area spectrum (48), wherein a start or stop of this running color change is provided, and
the repetition frequency of the cycle is freely selectable.

6. The device according to claim 5, furthermore comprising a touch screen, in particular a touch screen to communicate initial parameters to the computer (13) to characterize an image region that is in particular a hair region.

7. Drugstore having a device according to any of the claims 5 till 6.

## Revendications

1. Procédé pour une consultation de coloration capillaire ou une visualisation de coloration capillaire dans lequel, à l'aide d'une caméra vidéo, un ordinateur et au moins un écran d'affichage, une sélection d'une coloration capillaire souhaitée d'une personne peut être représentée sur l'écran d'affichage, **caractérisé en ce que** les images individuelles actuelles (21) de la personne (11) sont enregistrées de façon continue et sont transmises dans l'ordinateur (13) en temps réel avec l'aide de la caméra vidéo (12) dans une séquence d'images continue, dans lequel une modification d'image et un traitement d'image automatiques sont effectués pour chaque image individuelle (21) avec l'aide d'un dispositif (31), dans lequel l'ordinateur (13) identifie de façon continue une région de cheveux (32) de la personne (11) au moyen d'une analyse automatique de valeurs de couleur de pixel proches et similaires et/ou d'une analyse automatique d'une texture contiguë et/ou de propriétés morphologiques contiguës et modifie la coloration capillaire (33) dans cette région de cheveux (32) selon des spécifications prédéterminées et dans lequel les images individuelles modifiées (21) sont représentées de nouveau en temps réel sur au moins un écran d'affichage (14,15) et/ou un écran tactile (22, 23), dans lequel
la coloration capillaire (33) est modifiée de façon continue et de façon cyclique le long du spectre d'un cercle chromatique (48), dans lequel un moyen de démarrage ou d'arrêt est prévu pour ce changement de couleur en cours et
la fréquence de répétition du cycle peut être choisie librement.

2. Procédé selon une des revendications précédentes, **caractérisé en ce que** des paramètres initiaux spécifiques, en particulier des teintes de couleur, une texture et/ou une morphologie sont communiqués à l'ordinateur (13) afin de caractériser une région d'image, de préférence pour caractériser une région de cheveux (32).

3. Procédé selon la revendication 1 ou 2, **caractérisé en ce que** le dispositif (31) traite automatiquement de façon continue des paramètres initiaux entrés manuellement d'une région d'image pour l'initialisation, dans lequel en tant qu'au moins un paramètre initial, la région de cheveux (32) est identifiée et couverte d'une coloration capillaire facultative souhaitée (36).

4. Procédé selon l'une des revendications précédentes, **caractérisé en ce que** la séquence d'images de plusieurs images individuelles (21) est représentée en tant qu'image miroir (39) pour la cliente (11) par au moins un écran d'affichage (14).

5. Appareil pour une consultation de coloration capillaire ou une visualisation de coloration capillaire, comprenant une caméra vidéo pour enregistrer continuellement des images individuelles actuelles (21) d'une personne (11), un ordinateur (13) auquel les images individuelles peuvent être transmises dans une séquence d'images continue en temps réel, un dispositif (31) pour la réalisation d'une modification des images et d'un traitement d'image automatiques pour chaque image individuelle (21), **caractérisé en ce que** l'ordinateur (13) identifie de façon continue une région de cheveux (32) de la personne (11) au moyen d'une analyse automatique de valeurs de couleur de pixel proches et similaires et/ou d'une analyse automatique d'une texture contiguë et/ou de propriétés géomorphologiques contiguës et permet à la coloration capillaire (33) d'être modifiée dans cette région de cheveux (32) selon des spécifications prédéterminées et au moins un écran d'affichage (14,15) pour afficher une sélection de la coloration capillaire souhaitée de la personne et pour afficher les images individuelles modifiées (21) en temps réel, dans lequel
la coloration capillaire (33) peut être modifiée de façon continue et de façon cyclique le long du spectre d'un cercle chromatique (48), dans lequel un moyen de démarrage ou d'arrêt est prévu pour ce changement de couleur en cours et
la fréquence de répétition du cycle peut être choisie librement.

6. Appareil selon la revendication 5 comprenant en outre un écran tactile, en particulier un écran tactile pour communiquer des paramètres initiaux à l'ordinateur (13) afin de caractériser une région d'image, constituée en particulier par une région de cheveux.

7. Droguerie présentant un appareil selon l'une quelconque des revendications 5 à 6.
